# EUROPEAN PATENT SPECIFICATION

(11) **EP 3 146 754 B1**
(45) Date of publication and mention of the grant of the patent: **18.04.2018**
(21) Application number: 15730874.3
(22) Date of filing: 19.05.2015
(51) Int. Cl.: H04W 24/00, H04L 5/16, H04W 88/02

(54) **METHODS, USER EQUIPMENT AND NETWORK NODE FOR SUPPORTING CELL IDENTIFICATION**
VERFAHREN, BENUTZERGERÄT UND NETZWERKKNOTEN ZUR UNTERSTÜTZUNG VON ZELLIDENTIFIKATION
PROCÉDÉS, ÉQUIPEMENT D'UTILISATEUR ET NOEUD DE RÉSEAU PERMETTANT UNE IDENTIFICATION DE CELLULE

(30) Priority: 19.05.2014 US 201462000302 P
(43) Date of publication of application: 29.03.2017
(73) Proprietor: Telefonaktiebolaget LM Ericsson (publ), 164 83 Stockholm (SE)
(72) Inventor: KAZMI, Muhammad, SE-167 39 Bromma (SE); ZHANG, Zhi, SE-226 46 Lund (SE); THANGARASA, Santhan, SE-162 44 Vällingby (SE)
(74) Representative: Zacco Sweden AB
(86) International application number: PCT/SE2015/050557
(87) International publication number: WO 2015/178832

(56) References cited:
- WO-A1-2012/044246
- WO-A1-2014/027851
- US-A1- 2010 290 374
- US-A1- 2013 083 710
- NORTEL: "eNB knowledge of HD-FDD UE capability", 3GPP DRAFT; R2-082245 HD-FDD TERMINALS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080427, 27 April 2008 (2008-04-27), XP050140012, [retrieved on 2008-04-27]
- ERICSSON: "Impact of Low Cost MTC on RRM requirements", 3GPP DRAFT; R4-140747 HD-FDD LOW COST MTC IMPACT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Prague, Czech Republic; 20140210 - 20140214 9 February 2014 (2014-02-09), XP050740417, Retrieved from the Internet: URL:http://www.3gpp.org/ftp/Meetings_3GPP_ SYNC/RAN/RAN4/Docs/ [retrieved on 2014-02-09]

## Description

### Technical field

The present disclosure relates generally to a User Equipment (UE), a network node and methods therein, for supporting cell identification by the UE of a second cell when operating in a first cell.

### Background

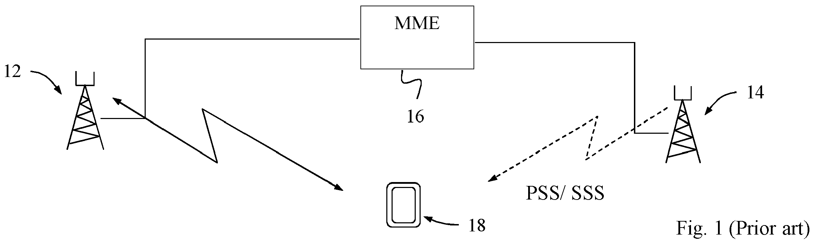

FIG. 1 illustrates a wireless communication system 10 that includes a first base station 12 serving a first cell, at least a second base station 14 serving a second cell, a mobile management entity (MME) 16 and a UE 18. The base stations 12 and 14 and the MME 16 may be referred to as network nodes. The MME 16 is in communication with the base stations 12 and 14, which communicate wirelessly to one or more UEs 18. The base stations 12 and 14 have respective coverage areas which may overlap. The UE 18 is being served by the base station 12 of the first cell and performs identification of the second cell and measurements on radio signals transmitted by the base station 14 of the second cell.

In half duplex frequency division duplex (HD-FDD) operation, the uplink (UL) and downlink (DL) transmissions between a base station 12 and a UE 18 take place on different carrier frequencies at different times, i.e., not simultaneously. In other words the UL and DL transmissions take place in different time resources and also on different carrier frequencies, i.e., uplink transmissions on a UL carrier and downlink transmissions on a DL carrier. In this disclosure, the term "time resource" is used to represent a time period in which radio transmission can take place in the wireless communication system 10. Some non-limiting examples of time resources include symbols, time slots, subframes, transmission time intervals (TTI), interleaving times, etc.

The HD-FDD operation is band specific. Therefore the UE indicates as part of its capability, e.g., UE-EUTRA-Capability, one or more of the supported bands which the UE can use for HD-FDD operation. For example, the same UE may indicate that it supports Evolved Universal terrestrial radio access (E-UTRA) band 1 and E-UTRA band 3 as full duplex FDD (FD-FDD) bands, whereas the UE may further indicate that it supports E-UTRA band 8 and E-UTRA band 5 as HD-FDD bands.

In HD-FDD operation the UE switches between using UL and DL time resources, e.g., UL and DL subframes. The switching can be from UL to DL time resources or from DL to UL time resources. The UE's reception during DL time resources is referred to as Rx and the UE's transmission during UL time resources is referred to as Tx. The switching operation may be interchangeably called a transition, or Rx-Tx, or Tx-Rx switching or transition, etc.

The switching causes interruption of the UE's operation of receiving and transmitting due to change in the frequency of operation and also to account for timing advances which in turn depend upon the maximum cell range. Therefore, some time resources, e.g., subframes, may be unused by the UE to account for such switching between UL and DL time resources, e.g. subframes. These unused time resources at the UE are interspersed between UL and DL time resources available for use in the UE's operation. The switching between UL and DL time resources may be done dynamically, e.g., as frequent as after every UL or DL time resource. In this case, the switching is typically realized by scheduling in a physical downlink control channel (PDCCH). The switching between UL and DL time resources may also be done on a static or semi-static basis. The UE may be configured with a pattern of UL and DL time resources by signaling from the network node, or the UE may use a pre-defined pattern of UL and DL time resources that has thus been preconfigured in the UE.

The terms switching time, HD switching time, HD-FDD switching time, switching delay, switching duration, switching period, guard time, guard period, transition time, transition duration, transition or switching between receive (Rx) and transmit (Tx), Rx-to-Tx or Tx-to-Rx transition or switch or guard time, may be used to denote the switching between UL and DL time resources.

The number and location of subframes used for DL, UL or unused subframes, can vary by frame or by multiples of frames. For example, in one radio frame (e.g. radio frame #1) subframes # 9, #0, #4 and #5 may be used for DL and subframes # 2 and #7 may be used for UL transmission. But in another radio frame (e.g. radio frame #2) subframes #0 and #5 may be used for DL and subframes # 2, #3, #5, #7 and #8 may be used for UL transmission.

So-called machine-to-machine (M2M) communication, also known as machine type communication (MTC), is used for establishing communication between machines and between machines and humans. The communication may include exchange of data, signaling, measurement data, configuration information, etc. An MTC device is expected to be of low cost and low complexity. A low complexity UE for M2M operation may implement one or more low cost features such as smaller downlink and uplink maximum transport block size, e.g., 1000 bits, and reduced downlink channel bandwidth of, for example, 1.4 MHz for a data channel, e.g., physical downlink shared channel (PDSCH). For example, a low complexity UE may operate in an HD-FDD mode and may have one or more of the following additional features: single receiver (1 Rx) at the UE, smaller downlink and/or uplink maximum transport block size, e.g., 1000 bits, and reduced downlink channel bandwidth of 1.4 MHz for the data channel.

Various radio measurements are typically performed by the UE on the serving cell as well as on neighbor cells over some known reference symbols or pilot sequences transmitted by network nodes of the serving cell and the neighbor cells, respectively. The radio measurements may be made on cells on an intra-frequency carrier, inter-frequency carrier(s), and on inter-RAT carriers(s) depending upon the UE capabilities. The inter-frequency and inter-RAT measurements may be performed by the UE during measurement gaps.

The radio measurements can be performed for various purposes. Some non-limiting examples of measurement purposes include: mobility, positioning, self-organizing network (SON), minimization of drive tests (MDT), operation and maintenance (O&M), network planning and optimization, etc. Examples of measurements in Long Term Evolution (LTE) systems are cell identification (also known as physical cell identity (PCI) acquisition, cell search, etc.), reference symbol received power (RSRP), reference symbol received quality (RSRQ), cell global identity (CGI) acquisition, reference signal time difference (RSTD), UE RX-TX time difference measurement, radio link monitoring (RLM), which includes out-of-synchronization detection and in-synchronization detection, etc., channel state information (CSI) measurements performed by the UE and used for scheduling, link adaptation, etc., by the network. Some non-limiting examples of CSI measurements or CSI reports include channel quality indicator (CQI), pre-coding matrix indicator (PMI), rank indicator (RI), etc. They may be performed on reference signals like cell specific reference signal (CRS), channel state information-reference signal (CSI-RS) or demodulation reference signal (DMRS).

The DL subframe # 0 and subframe # 5 may carry synchronization signals that the UE can use for identifying a cell, i.e., both a primary synchronization signal (PSS) and a secondary synchronization signal (SSS). In order to identify an unknown cell, the UE needs to acquire the timing of that cell and eventually the physical cell identity (PCI). Subsequently, the UE may also measure the RSRP and/or RSRQ of the newly identified cell in order to use itself the measurement and/or report the measurement to the network node. In total, there are typically 504 different PCIs that can be used in the network.

Therefore, the UE can search or identify a cell in DL subframe # 0 and/or in DL subframe # 5, depending on its implementation. The UE regularly attempts to identify neighbor cells on at least the serving carrier frequency or frequencies. But the UE may also search cells on non-serving carrier(s) when configured by the network node to do so. In order to save power consumption in the UE, typically the UE searches for neighbor cells in only one of the DL subframes # 0 and # 5. In order to further save battery power, i.e. reduce power consumption, the UE may search cells, e.g. neighbor cells, once every 40 ms when operating in non-discontinuous reception (non-DRX) or in short DRX cycles, e.g., up to 40 ms. In longer DRX cycles, the UE typically searches a cell once every DRX cycle.

During each search attempt, the UE typically stores a snapshot of 5-6 ms and post processes the snapshot by correlating the stored signals with the known primary synchronization signal (PSS)/secondary synchronization signal (SSS) sequences. In this disclosure, the term "snapshot" means that the UE receives and detects a sample of a certain duration called the sample duration, which sample can be post processed in search for information therein and/or for measuring the received sample. In non-DRX operation, the UE should be able to identify and measure an intra-frequency cell (including RSRP/RSRQ measurements) within 800 ms, i.e., 20 sampling attempts in total, which may include 15 samples used for cell identification (PCI acquisition) and 5 samples used for RSRP/RSRQ measurements.

When the UE operates in HD-FDD mode, the network node, e.g., serving eNode B, should ensure that at least certain number of DL subframes, e.g., N DL subframes, of the measured cell are available at the UE to enable the UE to perform radio measurements, e.g., RSRP/RSRQ, cell search, etc. In this disclosure, the term "available subframe" indicates that the UE can perform cell search and any measurements on the subframe. For example the network node may have to schedule the HD-FDD UE such that these N DL subframes of the measured cell are not affected due to RX-TX transition or switching. This may put considerable constraints on the scheduling procedure in the network node. Therefore, it is desirable to keep both the value of N, i.e. the number of DL subframes of a cell to be measured when made available at the UE for the measurements, and how frequent the available time resources, i.e. the N DL subframes, occur, as low as possible. However, a low value of N and a low rate of available time resources may have a negative impact on the UE measurement procedure. This in turn may degrade the measurement performance and may also degrade the mobility performance.

WO 2012/044246 A1 relates to a method for handling measurements in a communications network where a UE may be required to meet requirements for one or more non-positioning measurements provided at least a pre-defined number or set of sub-frames in a time period associated with a half-duplex FDD band are available for performing these measurements.

### Summary

It is an object of embodiments described herein to address at least some of the problems and issues outlined above. It is possible to achieve this object and others by using a method and a node as defined in the attached independent claims.

According to one aspect, a method is performed by a User Equipment, UE, operating in a half-duplex frequency division duplex, HD-FDD, mode when being served by a first cell in a wireless communication system, for identifying and/or measuring a second cell. In this method, the UE obtains information concerning a minimum number of downlink time resources, N, of the second cell that are available at the UE over a period of time, T0. The UE then adapts at least one of a sample duration and a sampling rate based on the obtained information, and performs identification of the second cell and/or measurement on the second cell by sampling signals according to the adapted sample duration and/or sampling rate.

According to another aspect, a UE is arranged to operate in a half-duplex frequency division duplex, HD-FDD, mode when being served by a first cell in a wireless communication system. The UE comprises a processor and a memory, said memory comprising instructions executable by said processor whereby the UE is operative to:
- obtain information concerning a minimum number of downlink time resources, N, of the second cell that are available at the UE over a period of time, T0,
- adapt at least one of a sample duration and a sampling rate based on the obtained information, and
- perform identification of the second cell and/or measurement on the second cell by sampling signals according to the adapted sample duration and/or sampling rate.

According to another aspect, a method is performed by a network node of a first cell in a wireless communication system, when serving a User Equipment, UE, operating in a half-duplex frequency division duplex, HD-FDD, mode. In this method, the network node receives capability information from the UE. The received capability information concerns a minimum number of downlink time resources of a second cell needed to be available at the UE within a certain time period in order for the UE to identify the second cell and/or perform measurement on the second cell. The network node then performs one or more radio operation tasks based on the received capability information.

According to another aspect, a network node of a first cell in a wireless communication system is arranged to serve a User Equipment, UE, operating in a half-duplex frequency division duplex, HD-FDD, mode. The network node comprises a processor and a memory, said memory comprising instructions executable by said processor whereby the network node is operative to:
- receive capability information from the UE, the capability information concerning a minimum number of downlink time resources of a second cell needed to be available at the UE within a certain time period in order for the UE to identify the second cell and/or perform measurement on the second cell (908), and
- perform one or more radio operation tasks based on the received capability information.

According to another aspect, a method performed by a network node of a first cell in a wireless communication system, when serving a User Equipment, UE, operating in a half-duplex frequency division duplex, HD-FDD, mode. In this method, the network node signals information to the UE concerning a minimum number of downlink time resources, N, of the second cell that are available at the UE over a period of time, T0, thus enabling the UE to adapt at least one of a sample duration and a sampling rate based on the obtained information and to identify the second cell and/or perform measurement of the second cell by sampling signals according to the adapted sample duration and/or sampling rate.

The above UE, network node and methods therein may be configured and implemented according to different optional embodiments to accomplish further features and benefits, to be described below.

A computer program product is also provided for each of the UE and the network node. Each computer program product comprises instructions which, when executed on at least one processor in the UE or in the network node, respectively, cause the at least one processor to carry out the respective methods described above for the UE and the network node.

### Brief description of drawings

The solution will now be described in more detail by means of exemplary embodiments and with reference to the accompanying drawings, in which:
Fig. 1 is a communication scenario illustrating how a UE served by a first cell identifies a second cell, according to the prior art.
Fig. 2a and 2b illustrate an example of how a UE may perform sampling of signals, according to some possible embodiments.
Fig. 3a and 3b illustrate another example of how a UE may perform sampling of signals, according to further possible embodiments.
Fig. 4a and 4b illustrate another example of how a UE may perform sampling of signals, according to further possible embodiments.
Fig. 5a and 5b illustrate another example of how a UE may perform sampling of signals, according to further possible embodiments.
Fig. 6a and 6b illustrate another example of how a UE may perform sampling of signals, according to further possible embodiments.
Fig. 7 is a flow chart illustrating a procedure in a UE, according to further possible embodiments.
Fig. 8 is a flow chart illustrating a procedure in a network node, according to further possible embodiments.
Fig. 9 is a block diagram illustrating a UE and a network node in more detail, according to further possible embodiments.

### Detailed description

The term "User Equipment, UE" used herein may refer to any type of wireless device capable of communicating with a network node of a network for wireless communication, hereafter called "network" for short, or with another UE over radio signals. Further, the UE may be any device for radio communication, such as a target device, device to device (D2D) UE, machine type UE or UE capable of machine to machine communication (M2M), a sensor equipped with UE, iPAD, tablet, mobile terminal, smart phone, laptop embedded equipment (LEE), laptop mounted equipment (LME), USB dongles, Customer Premises Equipment (CPE), to mention some illustrative but non-limiting examples of UE.

The term "radio network node" or simply "network node (NW node)", may refer to any kind of network node which may be a base station, radio base station, base transceiver station, base station controller, network controller, evolved Node B (eNB), Node B, Multi-cell/multicast Coordination Entity (MCE), Mobile Management Entity (MME), relay node, access point, radio access point, Remote Radio Unit (RRU), Remote Radio Head (RRH), core network node, to mention some illustrative but non-limiting examples of network node.

In this solution, the UE obtains information about the minimum number of DL time resources, N, of the second cell that are effectively "guaranteed" to be available at the UE over the time period T0, for enabling identification of the second cell and/or measurement on the second cell under HD-FDD operation. Thereby, the UE knows the values of the above-mentioned parameters N and T0, and it is able to adapt its operation as follows. Depending upon the values of the parameters N and T0, the UE adapts a sample duration and a sampling rate for taking samples, or "snapshots" of signals transmitted from the second cell which may be useful for identifying the second cell and/or for measurement on the second cell.

The terms "sample duration" and "sampling rate" used in this disclosure are defined as follows. The sample duration is a duration of a sample or a "snapshot" of DL radio signals that are received by the UE, which radio signals can be post-processed after the sample has been taken e.g. for identifying the second cell. The sampling rate is the frequency, periodicity or rate at which the UE obtains each sample or snapshot e.g. for identifying the second cell or for performing measurement on the second cell.

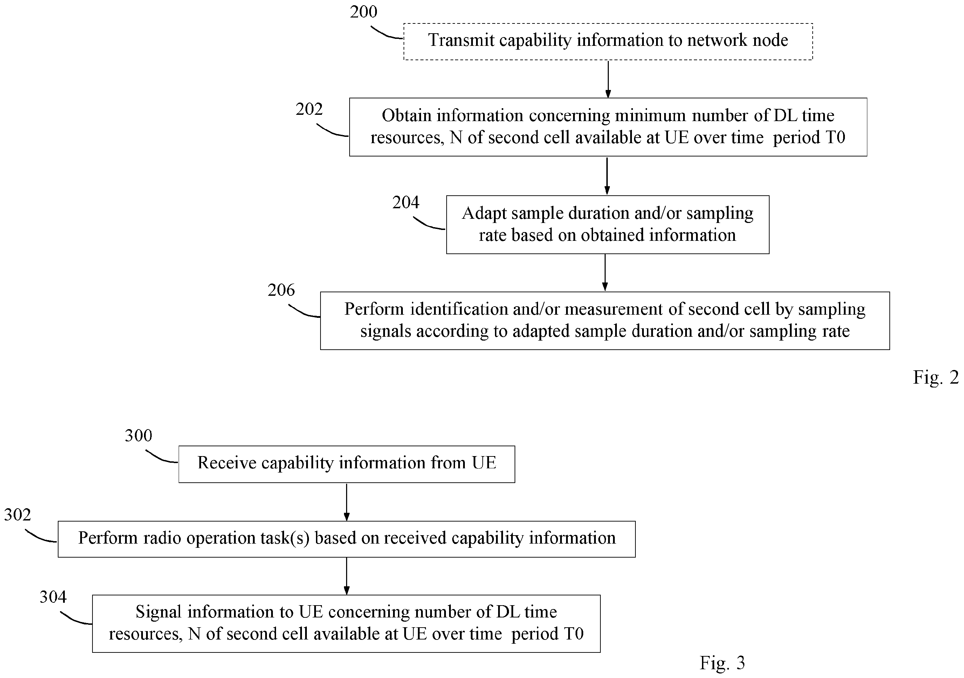

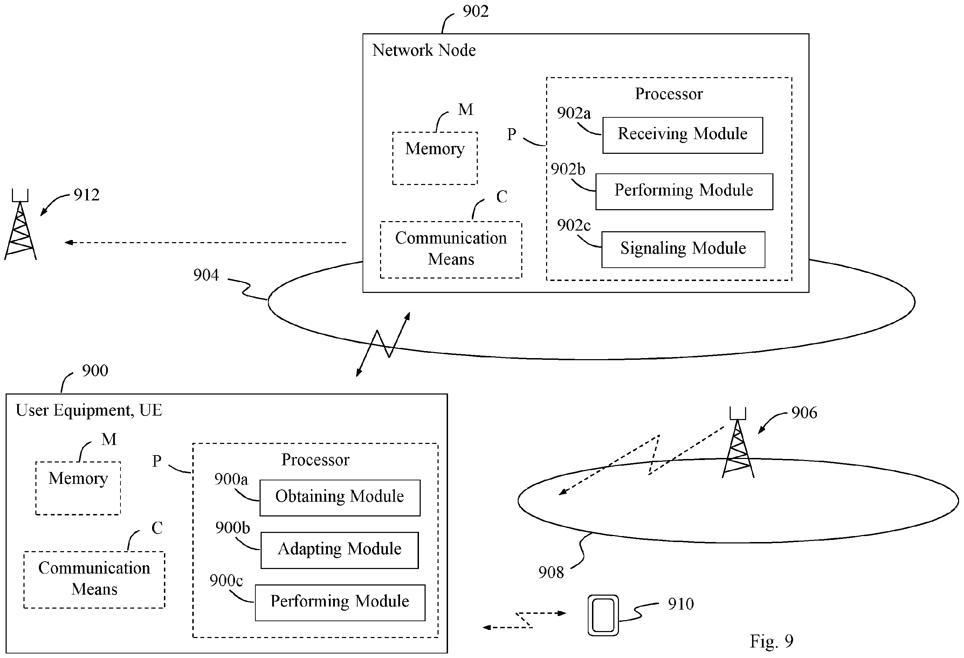

An example of how the solution may be employed will now be described with reference to the flow chart in Fig. 2 which illustrates a procedure with actions performed by a User Equipment, UE, to accomplish the functionality described above. Reference is also made to the block diagram in Fig. 9, illustrating a wireless communication system involving a UE 900 and a network node 902. In this procedure, the UE 900 operates in a half-duplex frequency division duplex, HD-FDD, mode when being served by a first cell 904 in a wireless communication system, for identifying and/or measuring a second cell 908.

A first **action 200** illustrates that the UE may in some embodiments transmit capability information to a network node 902 serving the first cell 904. The capability information transmitted by the UE 900 concerns a minimum number of downlink time resources of the second cell 908 needed to be available at the UE 900 within a certain time period, i.e. a duration that is predefined or otherwise known, in order for the UE 900 to identify the second cell 908 and/or perform measurement on the second cell 908. Some further examples of capability information transmitted in this action, and of how the capability information may be used by the network node, will be described later below particularly with reference to the flow chart in Fig. 3.

In a further **action 202**, the UE 900 obtains information concerning a minimum number of downlink time resources, N, of the second cell 908 that are available at the UE 900 over a period of time, T0. In this action, the UE 900 thus obtains values of two parameters, N and T0, which may be obtained according to different alternative embodiments as follows. In a possible embodiment, the UE 900 may obtain the information concerning N and T0, from the network node 902 serving the first cell 904. In this embodiment, the network node 902 of the first cell 904 may thus signal this information, i.e. the valid values of N and T0, to the UE 900 in a suitable manner, e.g. by broadcasting or by dedicated signaling.

In another possible embodiment, the UE 900 may obtain the information concerning N and T0, based on pre-defined values of N and T0, which in this embodiment are thus known to the UE 900, e.g. by hard coding or pre-configuration of the UE 900. In a further possible embodiment, the UE 900 may obtain the information concerning N and T0, from another UE 910 that is device-to-device capable. For example, the other UE 910 may have acquired the parameters N and T0 in some way, e.g. signaled from the network node 902 or from another network node, or based on pre-defined values of N and T0, and that other UE 910 may send this information to the UE 900 discussed herein in a device-to-device, D2D, communication between UE 900 and UE 910. Such a D2D communication may be established according to a regular procedure which is however outside the scope of the solution described herein.

In another **action 204**, the UE 900 adapts at least one of a sample duration and a sampling rate based on the obtained information. The terms "sample duration" and "sampling rate" have been defined above. In one possible embodiment, the UE 900 may for example adapt the sample duration to be at least the period of time, T0, during which the minimum number of downlink time resources, N, of the second cell 908 should thus be available at the UE 900. In this embodiment, "at least the period of time, T0" means that the sample duration is adapted to be T0 or larger. Thereby, the sample should include at least one such available downlink time resource, e.g. a subframe, of the second cell 908 even though its exact occurrence within T0 is unknown to the UE, such that the UE 900 is able to identify the second cell 908 and/or perform measurement on the second cell 908 using that downlink time resource.

In another possible embodiment, the UE 900 may adapt the sampling rate to be an integer multiple of the period of time, T0. For example, if T0 of the obtained information is 20 ms, the UE 900 may in this embodiment adapt the sampling rate to be any of 40, 60, 80, 100 ... ms, and so forth. In yet another possible embodiment, the UE 900 may reduce the sampling rate when the period of time, T0 is increased, e.g. to allow more time for post processing of each taken sample in the UE 900 before the next sample is taken. It may also be useful to make sure the sample duration is not too long for post processing, and that the UE has enough time to post process each sample properly before the next sample is taken according to the used sampling rate. Hence in another possible embodiment, the UE 900 may adapt the sample duration and/or the sampling rate based on a post-processing capability of the UE 900.

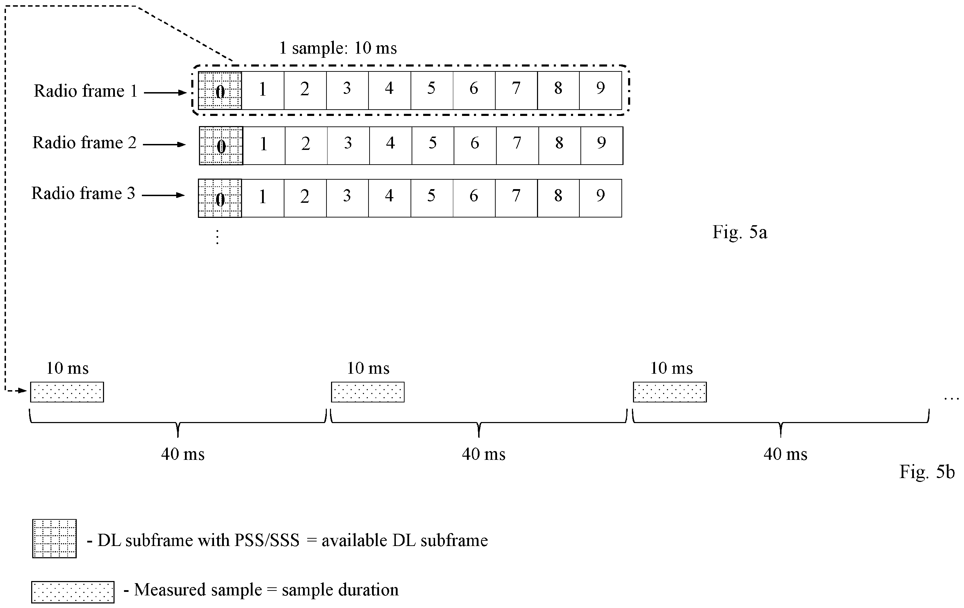

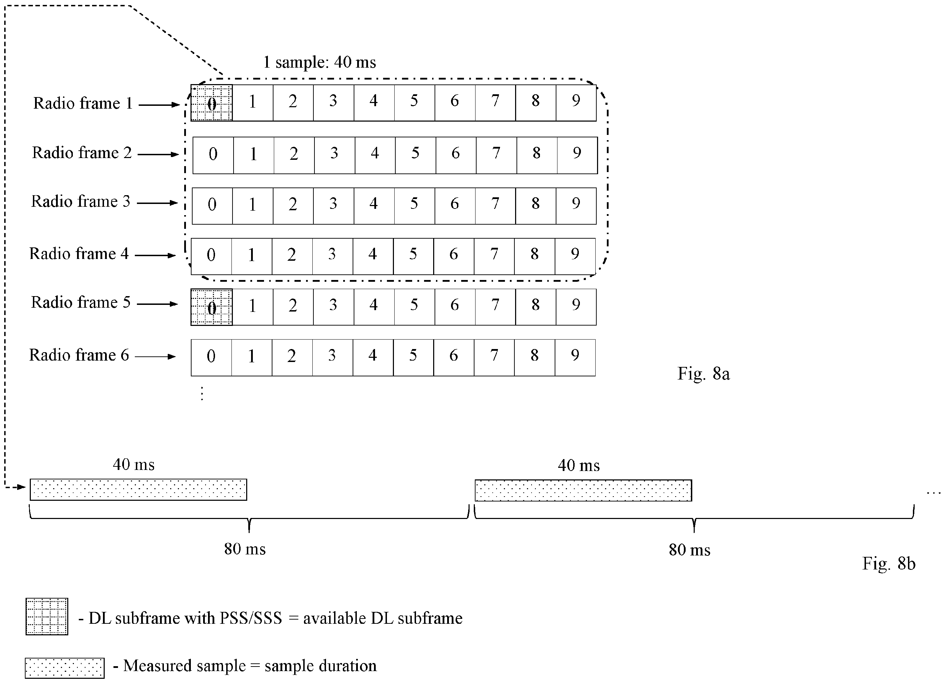

Some further illustrative but non-limiting examples of how the UE may adapt its sample duration and sampling rate in practice, will be described in more detail later below, particularly with reference to Figs 5a,b - 8a,b.

A further **action 206** illustrates that the UE 900 performs identification of the second cell 908and/or measurement on the second cell 908 by sampling signals according to the adapted sample duration and/or sampling rate. For example, the sampled signals may be post processed by the UE 900 in order to identify a synchronization signal therein for cell identification, such as the PSS and/or SSS, and/or to measure the RSRP and/or RSRQ of the sampled signals. In this action, the UE 900 may proceed in a more or less conventional manner to achieve proper cell identification or measurement, which is not necessary to describe herein as such.

In some further possible but non-limiting embodiments, the downlink time resources discussed herein may comprise one or more of: a time slot, a subframe, a symbol, a transmission time interval, an interleaving time, and a subframe for synchronization signals such as the above-mentioned PSS /SSS. In the scope of this embodiment, the downlink time resources may comprise more than just one time slot, subframe, symbol, etc., and the term "a" should be interpreted as "at least one". Even though the examples and features described herein frequently refer to subframes, the solution is not limited thereto.

Another example of how the solution may be employed will further be described with reference to the flow chart in Fig. 3 which illustrates a procedure with actions performed by a network node of a first cell in a wireless communication system, to accomplish the functionality described above. Reference is also made to the block diagram in Fig. 9 depicting said network node 900 of said first cell 902. In this procedure, it is assumed that the network node 902 is serving a UE 900, operating in a half-duplex frequency division duplex, HD-FDD, mode. The UE 900 may further operate in accordance with at least some of the features and embodiments described above for Fig. 2.

A first **action 300** illustrates that the network node 902 receives capability information from the UE 900, the capability information concerning a minimum number of downlink time resources of a second cell 908 needed to be available at the UE 900 within a certain time period, such as a predefined or otherwise known duration, in order for the UE 900 to identify the second cell 908 and/or perform measurement on the second cell 908. This action basically corresponds to action 200 above where the UE 900 transmits capability information to a network node 902 serving the first cell 904.

The network node 902 may use the received capability information of the UE 900 for controlling and/or adapting its radio operation as follows. In another **action 302,** the network node 902 thus performs one or more radio operation tasks based on the received capability information. In some possible embodiments, the one or more radio operation tasks may comprise any of:
- performing scheduling of downlink time resources of the first cell 904,
- transmitting the received capability information to another network node 912, and
- storing the received capability information for use in the future.

In another possible embodiment, the network node 902 signals information to the UE 900 concerning a minimum number of downlink time resources, N, of the second cell 908 that are available at the UE 900 over a period of time, T0. This embodiment is illustrated as another **action 304** which also basically corresponds to action 202 above in the case when the UE 900 receives the information as signalled by the network node 902. Thereby, the UE 900 is enabled to adapt at least one of a sample duration and a sampling rate based on the obtained information, e.g. in the manner described above for action 204, and to identify the second cell 908 and/or perform measurement of the second cell 908 by sampling signals according to the adapted sample duration and/or sampling rate, e.g. in the manner described above for action 206.

In further possible embodiments, the downlink time resources in this procedure may comprise one or more of a time slot, a subframe, a symbol, a transmission time interval, an interleaving time, and a subframe for synchronization signals such as the above-mentioned PSS /SSS. In this embodiment, the term "a" should be interpreted as "at least one", which was also remarked above for the procedure in Fig. 2.

The procedure described above for Fig. 3 may further be modified such that the actions 300-304 are performed in a different order. For example, the network node 902 may be required to perform action 304 and may then be free to perform actions 300 and 302 depending on the implementation, such that action 304 is mandatory and actions 300 and 302 are optional.

Some further examples of how the above solution and embodiments may be employed in practice will now be outlined.

At least some of the embodiments and examples described herein may be applicable to single carrier as well as to multicarrier or carrier aggregation (CA) operation of the UE in which the UE is able to receive and/or transmit data to more than one serving cell. The term carrier aggregation may also refer to a multi-carrier system, multi-cell operation, multi-carrier operation, multi-carrier transmission and/or reception. In CA, one of the component carriers (CCs) is the primary component carrier (PCC) or simply primary carrier or even anchor carrier. The remaining CCs are called secondary component carriers (SCC) or simply secondary carriers or even supplementary carriers. The serving cell is interchangeably called a primary cell (PCell) or primary serving cell (PSC). Similarly, a secondary serving cell is interchangeably called a secondary cell (SCell) or secondary serving cell (SSC).

Some embodiments and examples are described herein in reference to long term evolution (LTE). However, at least some of the embodiments and examples may also be applicable to any radio access technology (RAT) or multi-RAT systems, where the UE receives and/or transmit signals. These RATs may include LTE FDD/TDD, Wideband Code Division Multiple Access /High Speed Packet Access (WCDMA/HSPA), Global System for Mobile communication/GSM EDGE Radio Access Network (GSM/GERAN), Wi Fi, Wireless Local Area Network (WLAN), Code Division Multiple Access 2000 (CDMA2000) etc.

The embodiments and features disclosed herein may be used to provide greater flexibility in scheduling of UL and DL resources to UEs operating in HD-FDD, so that these resources are not unnecessarily wasted, and to provide more efficient operation of the UE. For example, a UE operating in HD-FDD and being served by a first network node of a first cell may be able to identify a new cell, called second cell, within a specified period of time and/or to perform measurements on the new cell. Further, the network node serving the UE may be able to adapt scheduling while taking into account UE capability. The UE capability may specify a minimum number of frames, for example, a minimum number of downlink subframes, of a cell required to identify the cell.

The UE is capable of HD-FDD operation on at least one frequency band. In some embodiments, the UE may also be capable of operating using one or more full duplex frequency division duplex (FD-FDD) bands. In some embodiments, the UE may also be capable of operating using one or more time division duplex (TDD) bands. The CA capable UE may also be served by more than one serving cell. The UE may typically identify at least a second serving cell which is managed by the first network node or by a second network node. In some examples, the first and the second cells may operate on the same carrier frequency, also known as intra-frequency cells. In other examples, the first and the second cells may operate on different carrier frequencies, in which case the second cell may be called an inter-frequency cell or inter-RAT cell with respect to the first cell.

The first network node serves or schedules the UE on the UL and/or the DL time resources, such as sub frames, of the first cell, enabling the UE to transmit and/or receive signals, e.g., PDSCH in DL, physical uplink shared channel (PUSCH) in UL, in the first cell. The first network node schedules the UE such that at least a certain number of DL time resources, N, per time period, T0, of the second cell are fully available at the UE. This enables the UE to identify the second cell by detecting signals from the second cell during the available DL time resources. As used herein, the term "time resource" may refer to a sub frame, time slot, symbol, group of time slots or sub frames, transmission time interval (TTI), interleaving time, etc.

It should be noted that although embodiments are described herein in terms of one and two network nodes, i.e. serving the first and second cells, it can be understood that the principles explained herein may also be valid for three or more network nodes.

The UE may obtain the values of N and T0 in different ways. For example, an applicable standard may specify that the UE must identify a cell and meet pre-defined requirements such as measurement time, cell identification time, etc., provided that at least DL sub frame #0 of the second cell, i.e., the cell to be identified, is available at the UE thus enabling the UE to receive the sub frame #0 of the second cell. In another example, the applicable standard may specify that the UE must identify the second cell and meet pre-defined requirements provided that at least DL sub frame #1 of the second cell is available at the UE. In yet another example, the applicable standard may specify that the UE must identify the second cell and meet pre-defined requirements provided DL sub frame #0 or DL sub frame #1 of the second cell is available at the UE.

In any of the above examples the value of T0 may also be pre-defined and known, or configured by the network node. For example, the applicable standard may specify that the UE must identify the second cell and meet pre-defined requirements provided that at least DL sub frame #1 of the second cell is available at the UE in every radio frame of 10 ms, i.e. when T0 = 10 ms, over the entire cell identification time. In some examples, the first network node may signal the values of N and T0 to the UE. These signaled values may be specific to all bands or to specific bands supported by the UE for HD-FDD operation.

In some examples, the UE may be pre-configured to know the value of one parameter, such as N, and it may obtain a value of the other parameter, such as T0, from a network node. For example, the UE may be pre-configured to know the value of N based on a pre-defined rule or pre-defined or standardized information, e.g. it may be pre-defined that N = 1 and DL subframe # 0 is available at the UE.

In some further examples, the UE may be pre-configured to know the value of the parameter T0, and may obtain the value of the other parameter N from a network node.

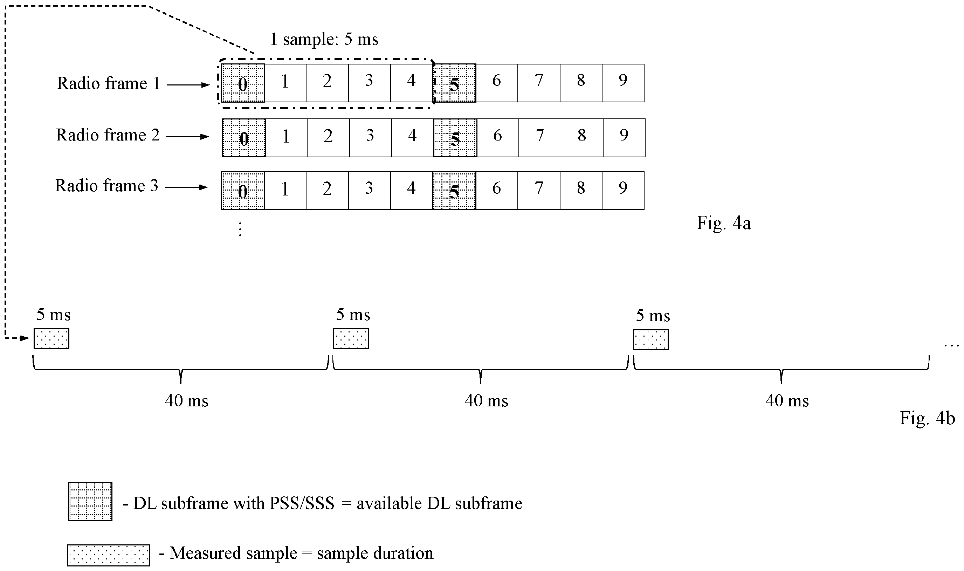

Examples of adaptation of the sample duration and sampling rate by the UE depending upon the availability of N DL time resource(s) per time period T0, will now be described with reference to Figs 4a,b - 8a,b. In more detail, Figs 4a, 5a, 6a, 7a and 8a illustrate how available DL subframes of the second cell are arranged in a scheme of radio frames 1, 2, 3, ..., each radio frame containing 10 subframes. This arrangement or distribution of subframes in the radio frame scheme is essentially defined by the information that the UE obtains according to action 200 above. Figs 4b, 5b, 6b, 7b and 8b further illustrate how the UE can adapt the sample, or snapshot, duration and sampling rate depending on the distribution of available DL subframes shown in Figs 4a, 5a, 6a, 7a and 8a, respectively. In these examples, the available DL subframes of the second cell are subframes in which a primary synchronization signal, PSS, and/or a secondary synchronization signal, SSS, are transmitted in the second cell, although the solution is not limited to these particular signals.

It should be noted that the radio frames of the second cell may not be synchronized with the radio frames of the first cell, and consequently the UE being served by the first cell may not know when the available DL subframes of the second cell occur relative the radio frames of the first cell. Even though these examples refer to subframes as being time resources, it should be understood that the examples are valid and applicable to any other type of time resources as well, depending on practical implementation.

In one example of a UE identifying an FD-FDD or TDD cell according to a conventional solution, which is illustrated in Figs 4a and 4b, the UE always uses the same sample duration of 5 ms and the same sampling rate of 40 ms, as shown in Fig. 4b, since all necessary DL subframes, in this case DL subframes # 0 and # 5, of the cell to be identified are available at the UE in every radio frame, as shown in Fig. 4a. Figs 4a and 4b actually illustrate a legacy scenario, also commonly referred to as the "baseline", for FDD in which both DL subframe #0 and subframe #5 are available in each radio frame for cell identification purpose. In this case, the sample duration can be as short as 5 ms because PSS/SSS are included in two subframes of each radio frame, i.e. every fifth subframe as shown in Fig. 4a.

In another solution, if a number of DL subframe(s) per unit time available is less than the maximum number of DL subframes, then the UE is also provided by the network node with the timing of the occurrence of such DL subframe(s). Therefore, the UE can still use similar sampling as in FD-FDD or TDD. According to the solution and embodiments disclosed herein, the UE under HD-FDD operation is able to adapt at least one of the sample duration and sampling rate based on the obtained values of the parameters N and T0.

In a first example of employing this solution, as shown in Figs 5a and 5b, the UE obtains information that at least DL subframe # 0 of the second cell is available at the UE in each radio frame, e.g. for identifying the second cell, i.e. N = 1 and T0 = 10 ms. Based on this information, the UE samples and obtains a sample of the second cell with a sample duration of 10 ms once per time unit, i.e. the sampling rate is 40 ms. In yet another exemplary UE implementation, the UE may obtain each sample slightly larger than 10 ms, for example 11-12 ms, to obtain both PSS and SSS symbols in the same sample. In either case, the UE stores each sample and post processes the stored sample to determine if the second cell is identified or not. The UE continues the sampling until the second cell has been identified.

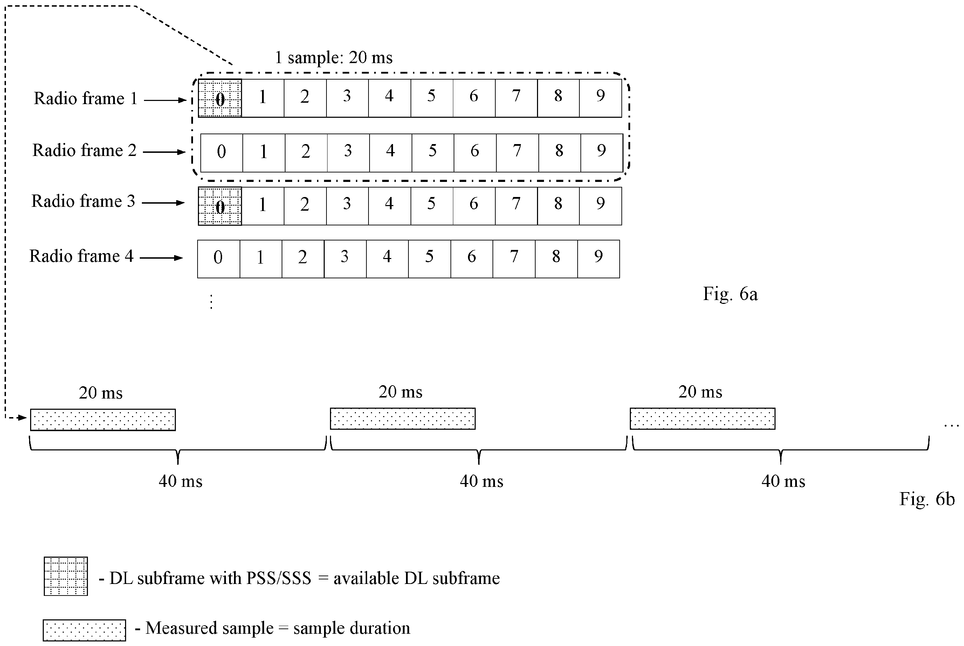

In a second example of employing this solution, as shown in Figs 6a,b, the UE obtains information that at least DL subframe # 0 of the second cell is available at the UE once per 2 radio frames for identifying the second cell, i.e. N = 1 and T0 = 20 ms. In this case, each sample duration or snapshot of the second cell taken by the UE is at least 20 ms. It may thus be assumed that DL subframe #0 includes the PSS/SSS. In some possible implementations, the duration of the sample may be even larger than 20 ms, e.g., 22 ms. This is because the UE may have no information about the timing of the actual occurrence of the DL subframe # 0 and it needs to ensure that a complete available DL subframe is captured by the sample.

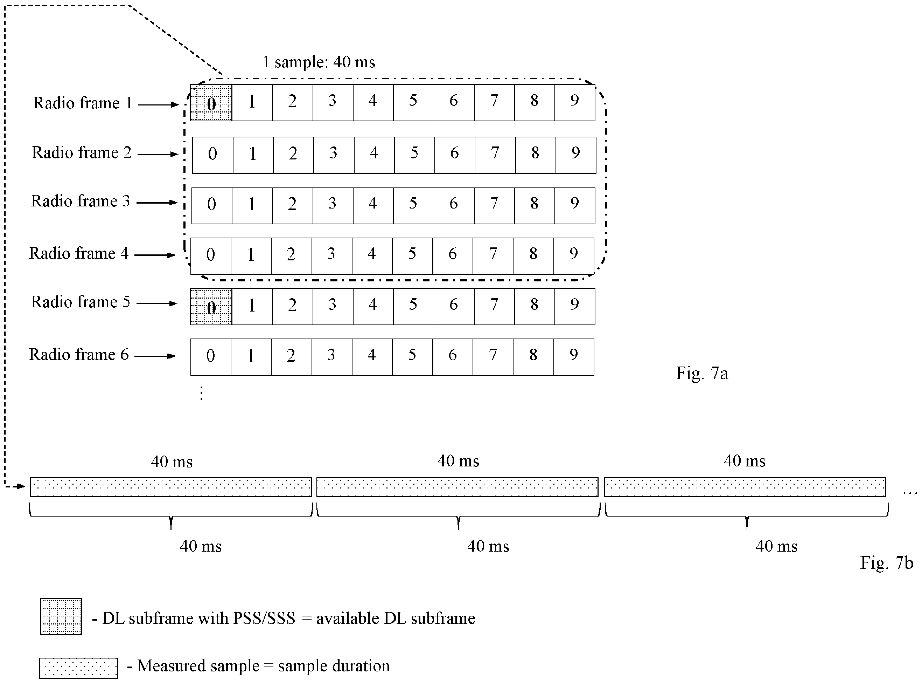

In a third example, as shown in Figs 7a,b, the UE obtains information that DL subframe # 0 or DL subframe # 5 of the second cell is available at the UE once per 4 radio frames for the UE to identify the second cell, i.e. N = 1 and T0 = 40 ms. In this case, each sample duration or snapshot of the second cell taken by the UE is at least 40 ms. It may thus be assumed that DL subframe #0 or DL subframe # 5 includes the PSS/SSS. Analogous with the above example, the duration of the sample may be even larger than 40 ms, e.g., 42 or even 44 ms, to ensure that a complete available DL subframe is captured by the sample.

A fourth example, as shown in Figs 8a,b, is similar to the third example with the difference being only in the sampling rate used by the UE. If the sample duration is extended, which may be commonly done for HD-FDD UEs, and the sampling rate is kept the same, e.g. as shown in Figs 5a,b - 7a,b, processing overload at the UE may occur, because a larger sample may require more processing time and more buffering and/or hardware. Hence, it may be desirable to "relax" the sampling rate as a function of the sample duration in order to allow more time for the UE to process the larger samples between the sampling occasions. This may be done according to the example in Figs 8a,b, where the sampling rate was relaxed, i.e. extended, from 40 ms to 80 ms, as compared to Figs 7a,b, to allow for increased sampling duration without the risk of processing overload. Thus, in some cases it may be beneficial to adapt the sampling rate depending upon the availability of DL time resource(s) per time period (T0) and sample duration.

From the above examples, it can be concluded that the duration of a sample or snapshot for identifying a cell in HD-FDD operation may be equal to or larger than the periodicity of T0 with which the available DL subframe of the second cell occurs, e.g. DL subframe # 0 or DL subframe # 5. The available DL subframes of the second cell may carry synchronization signals, such as PSS and/or SSS, to assist cell identification. A sample duration may be less than or equal to T0. If only the sampling duration is adapted by the UE, then the cell identification time may not be extended with respect to the baseline value.

The adaptation of the sample duration may require additional memory in the UE to store larger samples, e.g., in the range of 10 ms, 20 ms or even 40 ms, as compared to legacy or baseline implementations which require the UE to store a sample of only 5 or 6 ms in duration. The adaptation of the sample duration may further require additional processing unit to process larger samples or snapshots for detecting the second cell. Hence, additional hardware may be required in the UE for identifying the second cell under HD-FDD operation in some cases when the solution is employed. The additional hardware may be any one or more of: additional memory and additional processing power such as a processor or processing unit.

As noted above, the sampling rate may be adapted depending upon the availability of DL time resource(s) per time period (T0) and used for identifying the second cell. In other words, the UE may adapt the sampling rate (i.e. periodicity with which the UE obtains a sample) as a function of the obtained values N of and/or T0, for identifying the second cell. For example, if the DL subframe # 0 or DL subframe # 5 of the second cell will be available at the UE once every 10 ms, i.e., T0 = one radio frame, for the UE to identify the second cell, then the UE may adapt the sampling rate in order to sample the second cell once every 80 ms instead of once every 40 ms. In another example, if the DL subframe # 0 or DL subframe # 5 of the second cell will be available at the UE once every 20 ms, i.e., T0 = two radio frames, for the UE to identify the second cell, then the UE may adapt the sampling rate in order to sample the second cell once every 160 ms. In yet another example, if the DL subframe # 0 or DL subframe # 5 of the second cell will be available at the UE once every 40 ms , i.e., T0 = four radio frames, for the UE to identify the second cell, then the UE may adapt the sampling rate in order to sample the second cell once every 320 ms, and so forth.

From the above examples, it can be understood that the sampling rate for identifying a cell in HD-FDD operation may be decreased proportionally with the increase in the duration of the sample which in turn depends upon the values of N and T0.

As mentioned above, a purpose of reducing the sampling rate is to enable the UE to post process a larger sample when T0 is longer, without risking processing overload. For cell search in FDD in Radio Resource Control (RRC) connected mode, the sample duration, and thereby also the buffer size, is typically 6 ms. In this case, typically, the PSS processing time is about 1 ms, and the SSS processing time is about 13-14 ms, for a total processing time of about 15 ms. But when sample duration is 10 ms or more, the processing time is extended. For example, if N = 1, e.g., in the case when DL subframe # 0 is available to the UE, T0 = 40 ms and the UE uses the legacy or baseline sampling rate, i.e. one sample every 40 ms, then the UE will not have sufficient time to post process the obtained sample.

The reduced sampling rate may lead to extended cell identification time, which may be larger than the cell identification time in the case of using a legacy sampling rate, e.g., once every 40 ms. For example, if the sampling rate is reduced by a factor 2 with respect to the baseline value, then the cell identification time may also be extended proportionally. For example, if the cell identification time = 800 ms when using a baseline sampling rate, then the cell identification time = 1600 ms when using a sampling rate reduced by a factor of 2 with respect to the baseline value. Therefore, if the UE is required to meet extended cell identification time requirements for identifying the second cell under HD-FDD operation, then the UE is able to reduce the sampling rate.

To identify the second cell, the UE may adapt the sample duration and/or sampling rate with respect to reference values of the sample duration and/or sampling rate. The reference values of the sample duration and/or sampling rate are to be used by the UE for identifying a FD-FDD or TDD cell. As an example, the reference values may be used by the UE when both DL subframes # 0 and #5 of the cell to be identified are available in every radio frame at the UE. The same UE may be capable of using one or more HD-FDD bands for radio communication, and one or more FD-FDD and/or TDD bands for radio communication. For example, such a UE may use adapted sample duration and/or sampling rate for identifying the second cell under HD-FDD operation, although it may use reference values of these parameters for identifying the second cell under FD-FDD or TDD operation. In other words, the UE may use a first procedure with adapted parameters for identifying the second cell under HD-FDD operation, and use a second procedure with reference values of parameters for identifying the second cell under FD-FDD or TDD operation. Therefore, in some practical implementations, a UE capable of both HD-FDD band(s) and FD-FDD and/or TDD band(s) may be required to store and employ both the first and the second procedures. The UE may then use one or the other of these procedures depending upon whether the cell to be identified is HD-FDD or FD-FDD or TDD. Common examples of reference values of the sample duration and/or sampling rate are 5 ms and 40 ms, respectively.

In some further examples, the UE may transmit its capability information to a network node, which can be the first network node and/or a third network node. The capability information is related to the values of N and T0 required by the UE for identifying the second cell under HD-FDD operation. The first network node is the serving network node such as an eNode B, base station, relay, etc. The third network node may be a node in a core network such as an MME, positioning node, etc. The UE may even signal its capability information to another UE if the UE is capable of performing D2D operation, e.g., D2D communication, D2D signal transmission, etc.

More specifically, the UE capability information transmitted by the UE may indicate that the UE is capable of identifying the second cell under HD-FDD operation provided at least a certain minimum number of DL subframes per time period of the second cell are available at the UE. For example, the UE capability information may indicate that it is able to identify the second cell provided that at least DL subframe # 0 or # 5 is available at least once every 10 ms.

In yet another example, the UE capability information may indicate that it can identify the second cell provided that at least DL subframe # 0 or # 5 is available once every 10 ms + 10 · x ms, where x is an integer. In another possible example, the maximum value of x is N. In yet another example, the UE capability information may indicate that it can identify the second cell provided that at least DL subframe # 0 or # 5 is available regardless of the periodicity of the occurrence of the particular subframe #0 or #5.

More generally, the UE may indicate whether it has the capability to identify the second cell under HD-FDD operation according to any one or more procedures described above.

The UE capability information transmitted by the UE may further indicate a minimum number of UL subframes and/or DL subframes of the second cell that the UE needs in order to perform one or more measurements other than the cell identification under HD-FDD operation. Some non-limiting examples of such other measurements are RSRP, RSRQ, UE Receive-Transmit (Rx-Tx) time difference measurement, Signal to Interference and Noise Ratio (SINR), etc.

For example, the UE may indicate, as part of its capability, that it is capable of performing RSRP/RSRQ measurements on the signals of the second cell and of meeting one or more pre-defined RSRP/RSRQ measurement requirements, e.g., Layer 1 (L1) measurement period, measurement accuracy, etc., provided that at least one DL subframe is available per radio frame over the L1 measurement period of the RSRP/RSRQ measurements.

In another example, the UE may indicate that it is able to perform UE Rx-Tx time difference measurements on the signals of the cell and meet one or more pre-defined UE Rx-Tx time difference measurement requirements, e.g. L1 measurement period, measurement accuracy, etc., provided that at least one DL subframe and one UL subframe are available per radio frame over the L1 measurement period of the UE Rx-Tx time difference measurement.

The UE capability information may also contain additional or more specific information. For example, the UE capability information may indicate that the UE is capable of adapting the sample duration and/or sampling rate used by the UE for identifying the second cell under HD-FDD operation. The minimum number of DL subframes per time period that the UE uses for identifying the second cell under HD-FDD operation may depend upon the frequency band. In some further examples, the minimum number of DL subframes per time period that the UE uses for identifying the second cell under HD-FDD operation may depend upon the number of measurements the UE performs during the same or during partly overlapping time.

The capability information of the UE may be transmitted to the network node via higher layer signaling, e.g. RRC signaling. Further, the capability information may be transmitted by the UE to network node(s) and/or other UE(s) during initial call setup, during or after a cell change procedure, e.g. handover, PCell change, PCC change, RRC re-establishment, RRC release with redirection, etc., or during an ongoing session or call. The UE may send the capability information proactively and/or in response to a request received from the network node, e.g., the above-mentioned first network node, second network node, third network node, other UE, etc. When identifying the second cell under HD-FDD operation or when measuring a cell, the UE may retrieve the UE's capability and use it to adapt one or more parameters used for identifying or measuring the cell.

The transmitted UE capability information may be used by the network node for performing one or more radio operation tasks or network management tasks such as adapting of the scheduling. For example, the network node may adapt the scheduling (also known as assignment, allocation, etc.) of UL and/or DL time resources, e.g. subframes, to the UE depending upon the UE's capability. The capability may be expressed in terms of required number of UL and/or DL time resources for cell identification and/or measurements. The scheduling of UL and/or DL time resources may be performed to enable the UE to transmit and/or receive signals such as user data, control signaling, etc.

For example, if according to the UE capability, the UE needs at least DL subframe # 0 or # 5 once every radio frame of the second cell for identifying the second cell, then the first network node may schedule the UE in the first cell such that at least DL subframe # 0 or # 5 once every frame of the second cell is fully available at the UE. To achieve this objective, the first network node may determine the frame start time of the second cell. If the frames of the first and the second cells are aligned within a certain margin, e.g., ± µs, then the cells may be assumed to be synchronized. Otherwise, the first and second cells may be assumed to be unsynchronized.

As an example of scheduling adaptation in case of synchronized cells, the first network node in every second radio frame does not schedule the UE in the UL subframe just before the DL subframes # 0 and also in the UL subframe just after the DL subframes # 0. In this way, at least one DL subframe # 0 of the second cell is fully available at the UE, i.e., the DL subframe # 0 can be fully received at the UE. This enables the UE to identify the second cell and meet the pre-defined measurement requirements, e.g., cell identification time.

In the case of unsynchronized cells, the first network node may refrain from scheduling on 2 or more consecutive UL subframes before and after DL subframe # 0 in every second radio frame. The radio operation task of scheduling adaptation may further include forwarding the received UE capability information to another network node, e.g., the second network node or another network node, which may be used by the other network node after cell change of the UE. In another example, a third network node, such as an MME, may forward the UE capability information to the second network node.

The radio operation task(s) may further include that the first network node may store the received capability information and use it at a future time, e.g., when the same UE is served by the first network node.

The block diagram in Fig. 9 will now be described in more detail which illustrates a non-limiting example of how a UE 900 and a network node 902 of a first cell in a wireless communication system, respectively, may be structured to bring about the above-described solution and embodiments thereof. In this figure, the UE 900 and the network node 902 may be configured to operate according to any of the examples and embodiments of employing the solution as described above, where appropriate, and as follows. Each of the UE 900 and the network node 902 is shown to comprise a processor "P", a memory "M" and a communication circuit "C" with suitable equipment for transmitting and receiving radio signals in the manner described herein.

The communication circuit C in each of the UE 900 and the network node 902 thus comprises equipment configured for communication with each other over a radio interface using a suitable protocol for radio communication depending on the implementation. The solution is however not limited to any specific types of messages or protocols.

The UE 900 comprises means configured or arranged to perform at least some of the actions 200-206 of the flow chart in Fig. 2 in the manner described above. Further, the network node 902 comprises means configured or arranged to perform at least some of the actions 300-306 of the flow chart in Fig. 3 in the manner described above. The actions of Figs 2 and 3 may be performed by means of functional modules in the respective processor P in the UE 900 and the network node 902.

The UE 900 is arranged to operate in a half-duplex frequency division duplex, HD-FDD, mode when being served by a first cell 904 in a wireless communication system, and to identify and/or measure a second cell 908. In this example, the network node 902 provides radio coverage in the first cell 904 while another network node 906 provides radio coverage in the second cell 908. The UE 900 thus comprises the processor P and the memory M, said memory comprising instructions executable by said processor, whereby the UE 900 is operative as follows.

The UE 900 is operative to obtain information concerning a minimum number of downlink time resources, N, of the second cell that are available at the UE over a period of time, T0. This obtaining operation may be performed by an **obtaining module 900a** in the UE 900, e.g. in the manner described for action 202 above. The UE 900 is also operative to adapt at least one of a sample duration and a sampling rate based on the obtained information. This adapting operation may be performed by an **adapting module 900b** in the UE 900, e.g. in the manner described for action 204 above.

The UE 900 is further operative to perform identification of the second cell 908 and/or measurement on the second cell 908 by sampling signals according to the adapted sample duration and/or sampling rate. This performing operation may be performed by a **performing module 900c** in the UE 900, e.g. in the manner described for action 206 above.

For example, the UE 900 may be further operative to obtain the information concerning N and T0 from the network node 902, or based on pre-defined values of N and T0, or from another UE 910 that is device-to-device capable, in a radio communication between UE 902 and UE 910, as indicated by a dashed two-way arrow in Fig. 9.

The network node 902 is arranged to serve the UE 900 operating in a half-duplex frequency division duplex, HD-FDD, mode, the network node 902 comprising a processor P and a memory M, said memory comprising instructions executable by said processor whereby the network node 902 is operative as follows.

The network node 902 is operative to receive capability information from the UE 900, the capability information concerning a minimum number of downlink time resources of a second cell 908 needed to be available at the UE 900 within a certain time period, such as a predefined or otherwise known duration, in order for the UE 900 to identify the second cell 908 and/or perform measurement on the second cell 908. This receiving operation may be performed by a **receiving module 902a** in the network node 902, e.g. in the manner described for action 300 above. The network node 902 is also operative to perform one or more radio operation tasks based on the received capability information. The one or more radio operation tasks may be performed by a **performing module 902b** in the network node 902, e.g. in the manner described for action 302 above. As also mentioned above, examples of such radio operation tasks include performing scheduling of downlink time resources of the first cell 904, transmitting the received capability information to another network node 912, as indicated by a dashed arrow, and storing the received capability information for use in the future.

The network node 902 may also by operative to signal information to the UE 900 concerning a minimum number of downlink time resources, N, of the second cell 908 that are available at the UE 900 over a period of time, T0. Thereby, the UE 900 is enabled to adapt at least one of a sample duration and a sampling rate based on the obtained information and to identify the second cell 908 and/or perform measurement of the second cell 908 by sampling signals according to the adapted sample duration and/or sampling rate. This signaling operation may be performed by a **signaling module 902c** in the network node 902, e.g. in the manner described for action 304 above.

It should be noted that Fig. 9 illustrates various functional modules in the UE 900 and the network node 902, respectively, and the skilled person is able to implement these functional modules in practice using suitable software and hardware. Thus, the solution is generally not limited to the shown structures of the UE 900 and the network node 902, and the functional modules 900a-c and 902a-c therein may be configured to operate according to any of the features and embodiments described in this disclosure, where appropriate.

The functional modules 900a-c and 902a-c described above may be implemented in the UE 900 and the network node 902, respectively, by means of program modules of a respective computer program comprising code means which, when run by the processor P causes the UE 900 and the network node 902 to perform the above-described actions and procedures. Each processor P may comprise a single Central Processing Unit (CPU), or could comprise two or more processing units. For example, each processor P may include a general purpose microprocessor, an instruction set processor and/or related chips sets and/or a special purpose microprocessor such as an Application Specific Integrated Circuit (ASIC). Each processor P may also comprise a storage for caching purposes.

Each computer program may be carried by a computer program product in each of the UE 900 and the network node 902 in the form of a memory having a computer readable medium and being connected to the processor P. The computer program product or memory M in each of the UE 900 and the network node 902 thus comprises a computer readable medium on which the computer program is stored e.g. in the form of computer program modules or the like. For example, the memory M in each node may be a flash memory, a Random-Access Memory (RAM), a Read-Only Memory (ROM) or an Electrically Erasable Programmable ROM (EEPROM), and the program modules could in alternative embodiments be distributed on different computer program products in the form of memories within the respective UE 900 and network node 902.

The solution described herein may be implemented in each of the UE 900 and the network node 902 by a computer program comprising instructions which, when executed on at least one processor, cause the at least one processor to carry out the actions according to any of the above embodiments, where appropriate. The solution may also be implemented at each of the UE 900 and the network node 902 in a carrier containing the above computer program, wherein the carrier is one of an electronic signal, optical signal, radio signal, or computer readable storage medium.

While the solution has been described with reference to specific exemplifying embodiments, the description is generally only intended to illustrate the inventive concept and should not be taken as limiting the scope of the solution. For example, the terms "User Equipment, UE", "network node", "time resource", "sample duration", "sampling rate", "capability information" and "radio operation task" have been used throughout this disclosure, although any other corresponding entities, functions, and/or parameters could also be used having the features and characteristics described here. The solution is defined by the appended claims.

## Claims

1. A method performed by a User Equipment, UE, (900) operating in a half-duplex frequency division duplex, HD-FDD, mode when being served by a first cell (904) in a wireless communication system, for identifying and/or measuring a second cell (908), the method comprising:
- obtaining (202) information concerning a minimum number of downlink time resources, N, of the second cell (908) that are available at the UE over a period of time, T0,
the method **CHARACTERIZED BY** further comprising:
- adapting (204) at least one of a sample duration and a sampling rate based on the obtained information, and
- performing (206) identification of the second cell (908) and/or measurement on the second cell (908) by sampling signals according to the adapted sample duration and/or sampling rate.

2. A method according to claim 1, wherein the UE (900) adapts the sample duration to be at least the period of time, T0.

3. A method according to any one of claims 1-2, wherein the UE (900) adapts the sampling rate to be an integer multiple of the period of time, T0.

4. A method according to any one of claims 1-3, the method further comprising:
- transmitting (200) capability information to the network node (902), the capability information concerning a minimum number of downlink time resources of the second cell (908) needed to be available at the UE within a certain time period in order for the UE to identify the second cell (908) and/or perform measurement on the second cell (908).

5. A User Equipment, UE, (900) arranged to operate in a half-duplex frequency division duplex, HD-FDD, mode when being served by a first cell (904) in a wireless communication system, the UE (900) comprising a processor (P) and a memory (M), said memory comprising instructions executable by said processor whereby the UE (900) is operative to:
- obtain (900a) information concerning a minimum number of downlink time resources, N, of the second cell (908) that are available at the UE (900) over a period of time, T0,
the UE (900) **CHARACTERIZED BY** further being operative to:
- adapt (900b) at least one of a sample duration and a sampling rate based on the obtained information, and
- perform (900c) identification of the second cell (908) and/or measurement on the second cell (908) by sampling signals according to the adapted sample duration and/or sampling rate.

6. A UE (900) according to claim 5, wherein the UE (900) is configured to obtain the information concerning N and T0, from a network node (902) serving the first cell (904).

7. A UE (900) according to claim 5, wherein the UE (900) is configured to obtain the information concerning N and T0, based on pre-defined values of N and T0.

8. A UE (900) according to claim 5, wherein the UE (900) is configured to obtain the information concerning N and T0, from another UE (910) that is device-to-device capable.

9. A UE (900) according to any one of claims 5-8, wherein the UE (900) is configured to adapt the sample duration to be at least the period of time, T0.

10. A UE (900) according to any one of claims 5-9, wherein the UE (900) is configured to adapt the sampling rate to be an integer multiple of the period of time, T0.

11. A UE (900) according to any one of claims 5-10, wherein the UE (900) is configured to reduce the sampling rate when the period of time, T0 is increased.

12. A UE (900) according to any one of claims 5-11, wherein the UE (900) is configured to adapt the sample duration and/or sampling rate based on a post-processing capability of the UE.

13. A UE (900) according to any one of claims 5-12, wherein the downlink time resources comprise one or more of a time slot, a subframe, a symbol, a transmission time interval, an interleaving time, and a subframe for synchronization signals.

14. A UE (900) according to any one of claims 5-13, wherein the UE (900) is further operative to:
- transmit capability information to the network node (902), the capability information concerning a minimum number of downlink time resources of the second cell (908) needed to be available at the UE within a certain time period in order for the UE to identify the second cell (908) and/or perform measurement on the second cell (908).

15. A computer program product comprising instructions which, when executed on at least one processor, cause the at least one processor to carry out the method according to any one of claims 1-4.

## Patentansprüche

1. Verfahren, durchgeführt durch ein Benutzergerät, UE, (900), das in einem Halbduplex-Frequenzduplex-, HD-FDD-, Modus arbeitet, wenn es durch eine erste Zelle (904) in einem drahtlosen Kommunikationssystem bedient wird, zum Identifizieren und/oder Messen einer zweiten Zelle (908), wobei das Verfahren Folgendes umfasst:
- Erlangen (202) von Informationen in Bezug auf eine Mindestanzahl von Downlink-Zeitressourcen, N, der zweiten Zelle (908), die an dem UE über einen Zeitraum, T0, zur Verfügung stehen,
wobei das Verfahren **DADURCH GEKENNZEICHNET IST, dass** es ferner Folgendes umfasst:
- Anpassen (204) von zumindest einem von einer Abtastdauer und einer Abtastrate basierend auf den erlangten Informationen, und
- Durchführen (206) von Identifizierung der zweiten Zelle (908) und/oder Messung an der zweiten Zelle (908) durch Abtasten von Signalen gemäß der angepassten Abtastdauer und/oder Abtastrate.

2. Verfahren nach Anspruch 1, wobei das UE (900) die Abtastdauer so anpasst, dass sie zumindest dem Zeitraum, T0, entspricht.

3. Verfahren nach einem der Ansprüche 1-2, wobei das UE (900) die Abtastrate so anpasst, dass sie ein ganzzahliges Vielfaches des Zeitraums, T0, ist.

4. Verfahren nach einem der Ansprüche 1-3, wobei das Verfahren ferner Folgendes umfasst:
- Übertragen (200) von Fähigkeitsinformationen an den Netzknoten (902), wobei die Fähigkeitsinformationen eine Mindestanzahl von Downlink-Zeitressourcen der zweiten Zelle (908) betreffen, die an dem UE innerhalb eines bestimmten Zeitraums verfügbar sein müssen, sodass das UE die zweite Zelle (908) identifizieren kann und/oder eine Messung an der zweiten Zelle (908) durchführen kann.

5. Benutzergerät, UE, (900), das dazu angeordnet ist, in einem Halbduplex-Frequenzduplex-, HD-FDD-, Modus zu arbeiten, wenn es durch eine erste Zelle (904) in einem drahtlosen Kommunikationssystem bedient wird, wobei das UE (900) einen Prozessor (P) und einen Speicher (M) umfasst, wobei der Speicher Anweisungen umfasst, die durch den Prozessor ausführbar sind, wobei das UE (900) für Folgendes betreibbar ist:
- Informationen in Bezug auf eine Mindestanzahl von Downlink-Zeitressourcen, N, der zweiten Zelle (908), die an dem UE (900) über einen Zeitraum, T0, zur Verfügung stehen, zu erlangen (900a),
wobei das UE (900) **DADURCH GEKENNZEICHNET IST, dass** es ferner für Folgendes betreibbar ist:
- zumindest eines von einer Abtastdauer und einer Abtastrate basierend auf den erlangten Informationen anzupassen (900b), und
- Identifizierung der zweiten Zelle (908) und/oder Messung an der zweiten Zelle (908) durch Abtasten von Signalen gemäß der angepassten Abtastdauer und/oder Abtastrate durchzuführen (900c).

6. UE (900) nach Anspruch 5, wobei das UE (900) dazu konfiguriert ist, die Informationen in Bezug auf N und T0 von einem Netzknoten (902), der die erste Zelle (904) bedient, zu erlangen.

7. UE (900) nach Anspruch 5, wobei das UE (900) dazu konfiguriert ist, die Informationen in Bezug auf N und T0 basierend auf vordefinierten Werten von N und T0 zu erlangen.

8. UE (900) nach Anspruch 5, wobei das UE (900) dazu konfiguriert ist, die Informationen in Bezug auf N und T0 von einem anderen UE (910), das Gerät-zu-Gerät-fähig ist, zu erlangen.

9. UE (900) nach einem der Ansprüche 5-8, wobei das UE (900) dazu konfiguriert ist, die Abtastdauer so anzupassen, dass sie zumindest dem Zeitraum, T0, entspricht.

10. UE (900) nach einem der Ansprüche 5-9, wobei das UE (900) dazu konfiguriert ist, die Abtastrate so anzupassen, dass sie ein ganzzahliges Vielfaches des Zeitraums, T0, ist.

11. UE (900) nach einem der Ansprüche 5-10, wobei das UE (900) dazu konfiguriert ist, die Abtastdauer zu reduzieren, wenn der Zeitraum, T0, erhöht wird.

12. UE (900) nach einem der Ansprüche 5-11, wobei das UE (900) dazu konfiguriert ist, die Abtastdauer und/oder Abtastrate basierend auf einer Nachbearbeitungsfähigkeit des UE anzupassen.

13. UE (900) nach einem der Ansprüche 5-12, wobei die Downlink-Zeitressourcen eines oder mehrere von einem Zeitfenster, einem Unterrahmen, einem Symbol, einem Übertragungszeitintervall, einer Verschachtelungszeit und einem Unterrahmen für Synchronisierungssignale umfassen.

14. UE (900) nach einem der Ansprüche 5-13, wobei das UE (900) ferner für Folgendes betreibbar ist:
- Fähigkeitsinformationen an den Netzknoten (902) zu übertragen, wobei die Fähigkeitsinformationen eine Mindestanzahl von Downlink-Zeitressourcen der zweiten Zelle (908) betreffen, die an dem UE innerhalb eines bestimmten Zeitraums verfügbar sein müssen, sodass das UE die zweite Zelle (908) identifizieren kann und/oder eine Messung an der zweiten Zelle (908) durchführen kann.

15. Computerprogrammprodukt, umfassend Anweisungen, die, wenn sie auf dem zumindest einen Prozessor ausgeführt werden, den zumindest einen Prozessor dazu veranlassen, das Verfahren nach einem der Ansprüche 1-4 durchzuführen.

## Revendications

1. Procédé réalisé par un équipement d'utilisateur, UE, (900) fonctionnant dans un mode de duplexage par répartition en fréquence en semi-duplex, HD-FDD, lorsqu'il est desservi par une première cellule (904) dans un système de communication sans fil, pour identifier et/ou mesurer une deuxième cellule (908), le procédé comprenant :
- l'obtention (202) d'informations concernant un nombre minimum de ressources de temps de liaison descendante, N, de la deuxième cellule (908) qui sont disponibles au niveau de l'UE sur une période de temps, T0,
le procédé étant **caractérisé en ce qu'**il comprend en outre :
- l'adaptation (204) d'au moins une parmi une durée d'échantillonnage et une vitesse d'échantillonnage sur la base des informations obtenues, et
- la réalisation (206) d'une identification de la deuxième cellule (908) et/ou d'une mesure sur la deuxième cellule (908) par échantillonnage de signaux en fonction de la durée d'échantillonnage et/ou de la vitesse d'échantillonnage adaptée(s).

2. Procédé selon la revendication 1, dans lequel l'UE (900) adapte la durée d'échantillonnage pour être au moins la période de temps, T0.

3. Procédé selon l'une quelconque des revendications 1-2, dans lequel l'UE (900) adapte la vitesse d'échantillonnage pour être un multiple entier de la période de temps, T0.

4. Procédé selon l'une quelconque des revendications 1-3, le procédé comprenant en outre :
- la transmission (200) d'informations de capacité au noeud de réseau (902), les informations de capacité concernant un nombre minimum de ressources de temps de liaison descendante de la deuxième cellule (908) qui doivent être disponibles au niveau de l'UE dans une certaine période de temps pour que l'UE identifie la deuxième cellule (908) et/ou réalise une mesure sur la deuxième cellule (908).

5. Équipement d'utilisateur, UE, (900) agencé pour fonctionner dans un mode de duplexage par répartition en fréquence en semi-duplex, HD-FDD, lorsqu'il est desservi par une première cellule (904) dans un système de communication sans fil, l'UE (900) comprenant un processeur (P) et une mémoire (M), ladite mémoire comprenant des instructions exécutables par ledit processeur moyennant quoi l'UE (900) est opérationnel pour :
- obtenir (900a) des informations concernant un nombre minimum de ressources de temps de liaison descendante, N, de la deuxième cellule (908) qui sont disponibles au niveau de l'UE (900) sur une période de temps, T0, l'UE (900) étant **caractérisé en ce qu'**il est opérationnel en outre pour :
- adapter (900b) au moins une parmi une durée d'échantillonnage et une vitesse d'échantillonnage sur la base des informations obtenues, et
- réaliser (900c) une identification de la deuxième cellule (908) et/ou une mesure sur la deuxième cellule (908) par échantillonnage de signaux en fonction de la durée d'échantillonnage et/ou de la vitesse d'échantillonnage adaptée(s).

6. UE (900) selon la revendication 5, dans lequel l'UE (900) est configuré pour obtenir des informations concernant N et T0, d'un noeud de réseau (902) desservant la première cellule (904).

7. UE (900) selon la revendication 5, dans lequel l'UE (900) est configuré pour obtenir des informations concernant N et T0, sur la base de valeurs prédéfinies de N et T0.

8. UE (900) selon la revendication 5, dans lequel l'UE (900) est configuré pour obtenir des informations concernant N et T0, d'un autre UE (910) qui est apte au dispositif-à-dispositif.

9. UE (900) selon l'une quelconque des revendications 5-8, dans lequel l'UE (900) est configuré pour adapter la durée d'échantillonnage pour être au moins la période de temps, T0.

10. UE (900) selon l'une quelconque des revendications 5-9, dans lequel l'UE (900) est configuré pour adapter la vitesse d'échantillonnage pour être un multiple entier de la période de temps, T0.

11. UE (900) selon l'une quelconque des revendications 5-10, dans lequel l'UE (900) est configuré pour réduire la vitesse d'échantillonnage lorsque la période de temps, T0 est augmentée.

12. UE (900) selon l'une quelconque des revendications 5-11, dans lequel l'UE (900) est configuré pour adapter la durée d'échantillonnage et/ou la vitesse d'échantillonnage sur la base d'une capacité de post-traitement de l'UE.

13. UE (900) selon l'une quelconque des revendications 5-12, dans lequel les ressources de temps de liaison descendante comprennent un ou plusieurs parmi une tranche de temps, une sous-trame, un symbole, un intervalle de temps de transmission, un temps d'entrelacement, et une sous-trame pour signaux de synchronisation.

14. UE (900) selon l'une quelconque des revendications 5-13, dans lequel l'UE (900) est opérationnel en outre pour :
- transmettre des informations de capacité au noeud de réseau (902), les informations de capacité concernant un nombre minimum de ressources de temps de liaison descendante de la deuxième cellule (908) qui doivent être disponibles au niveau de l'UE dans une certain période de temps pour que l'UE identifie la deuxième cellule (908) et/ou réalise une mesure sur la deuxième cellule (908).

15. Produit de programme informatique comprenant des instructions qui, lorsqu'elles sont exécutées sur au moins un processeur, amènent l'au moins un processeur à effectuer le procédé selon l'une quelconque des revendications 1-4.
